# EUROPÄISCHE PATENTSCHRIFT

(11) **EP 1 476 381 B1**
(45) Veröffentlichungstag und Bekanntmachung des Hinweises auf die Patenterteilung: **20.12.2006**
(21) Anmeldenummer: 03742566.7
(22) Anmeldetag: 20.02.2003
(51) Int. Cl.: B65G 51/02, B65G 53/66, D06F 95/00

(54) **VERFAHREN UND VORRICHTUNG ZUM PNEUMATISCHEN FÖRDERN VON VORZUGSWEISE WÄSCHE**
METHOD AND DEVICE FOR THE PNEUMATIC TRANSPORT OF PREFERABLY LINEN
PROCEDE ET DISPOSITIF POUR LE TRANSPORT PNEUMATIQUE DE LINGE DE PREFERENCE

(30) Priorität: 20.02.2002 DE 10208178
(43) Veröffentlichungstag der Anmeldung: 17.11.2004
(73) Patentinhaber: Herbert Kannegiesser GmbH, 32602 Vlotho (DE)
(72) Erfinder: HEINZ, Engelbert, 32602 Vlotho (DE)
(74) Vertreter: Möller, Friedrich
(86) Internationale Anmeldenummer: PCT/EP2003/001770
(87) Internationale Veröffentlichungsnummer: WO 2003/070611

(56) Entgegenhaltungen:
- DE-A- 2 738 180
- DE-A- 2 918 125
- US-A- 3 208 800
- US-A- 3 469 931
- US-A- 5 060 399
- US-A- 5 884 822

## Beschreibung

Die Erfindung betrifft ein Verfahren zum pneumatischen Fördern von Wäsche oder dergleichen gemäß dem Oberbegriff des Anspruchs 1. Des Weiteren betrifft die Erfindung eine Vorrichtung zur pneumatischen Förderung von Wäsche oder dergleichen gemäß dem Oberbegriff des Anspruchs 9.

In gewerblichen Wäschereien wird Wäsche zu einer ersten Behandlungsstation oder auch zwischen aufeinanderfolgenden Behandlungsstationen unter anderem pneumatisch gefördert. Bei der Wäsche handelt es sich um Wäschestücke, beispielsweise Bettwäsche, Tischwäsche, Handtücher oder dergleichen, aber auch Bekleidungsstücke. Die Wäsche kann sowohl ungewaschen, also noch trocken, als auch nach der Wäsche im noch feuchten Zustand pneumatisch gefördert werden.

Die Wäsche gelangt üblicherweise als Wäschehaufen mit einer Vielzahl von Wäschestücken zum pneumatischen Förderer. Zum Beladen des Förderers saugt ein Saugkopf die Wäsche an. Da die einzelnen Teile der Wäsche im Wäschehaufen häufig verschlungen sind, saugt der Saugkopf gelegentlich eine so große Anzahl zusammenhängender Wäschestücke an, dass diese den Saugkopf verstopfen. Es bildet, sich dann praktisch vor dem Saugkopf ein Wäschepfropfen. Dieser führt zu einer Störung beim Beladen des pneumatischen Förderers.

Aus der DE 29 18 125 A ist eine Wascheinrichtung mit einem pneumatischen Fördersystem bekannt. Ein Saugeinlass des pneumatischen Fördersystems befindet sich in einem Sortier- oder Sammelraum für Schmutzwäsche. Im Sammel- und Sortierraum sind drei aufeinander folgende Förderer und ein Beschickungstisch zwischen dem letzten Förderer und dem Saugeinlass des pneumatischen Förderers vorgesehen. Die Wäsche wird zunächst auf den ersten Förderer gelegt und bedarfsweise von den darauf folgenden Förderern weitertransportiert auf den Beschickungstisch, von welchem die Wäsche in den Saugeinlass des pneumatischen Förderers gezogen wird. Die aufeinander folgenden Förderer und der Beschickungstisch können zu einer Vereinzelung oder zumindest einer Entzerrung der auf den ersten Förderer abgelegten Wäsche führen.

US 5,884,822 offenbart ein Verfahren, bzw. eine Vorrichtung, zur pneumatischen Förderung von Strumpfen gemäß dem Oberbegriff des Anspruchs 1, bzw des Anspruchs 9.

Ausgehend vom Vorstehenden liegt der Erfindung die Aufgabe zugrunde, ein Verfahren zum störungsfreien automatischen pneumatischen Fördern von Wäsche oder dergleichen und eine entsprechende Vorrichtung zu schaffen.

Ein Verfahren zur Lösung dieser Aufgabe weist die Maßnahmen des Anspruchs 1 auf. Dadurch, dass bei Bildung eines Wäschepfropfens vor dem Saugkopf der Saugkopf mit dem Wäschepfropfen angehoben und der Saugvorgang unterbrochen wird, wird der Verschluss des Saugkopfs durch den Wäschepfropfen wieder beseitigt, indem der Wäschepfropfen vom Saugkopf wieder losgelassen wird. Überraschend hat sich gezeigt, dass dabei der Wäschepfropfen zerfällt. Durch das Anheben und die Unterbrechung der Ansaugung beim Verschließen des Saugkopfs durch einen Wäschepfropfen erfolgt eine pneumatische Zerteilung bzw. Auflösung des Wäschepfropfens. Man kann dabei von einem pneumatischen "Sprengen" des Wäschepfropfens sprechen. Beim erneuten Ansaugen kann dann die Wäsche, insbesondere ein Wäscheposten aus mehreren Wäschestücken, den Saugkopf passieren und pneumatisch durch die Förderstrecke abgefördert werden. Bei großen Wäschepfropfen oder stark verschlungener Wäsche kann es erforderlich sein, den Wäschepfropfen mehrfach anzusagen und wieder vom Saugkopf zu lösen, bis die Wäsche so weit zerfällt, dass sie pneumatisch abförderbar ist. Auch dadurch ist eine zuverlässige automatische Beladung des pneumatischen Förderers gewährleistet.

Der Saugvorgang wird vorzugsweise nur dann unterbrochen, wenn sich ein Wäschepfropfen vor dem Saugkopf bildet. Solange die Wäsche oder ein Wäscheposten ohne einen zu großen Pfropfen angesaugt werden kann, findet eine nahezu kontinuierliche automatische Beladung des pneumatischen Förderers mit Wäsche statt. Nur wenn sich ein als Ganzes nicht mehr ansaugbarer Wäschepfropfen vor dem Saugkopf bildet, ist es erforderlich, vom Saugkopf den Wäschepropfen anzuheben und den Saugvorgang zu unterbrechen. Hierzu reicht eine kurzfristige Unterbrechung des Saugvorgangs aus, so dass keine nennenswerte Unterbrechung des Förderstroms stattfindet. Um an der Abgabeseite des pneumatischen Förderers stets Wäsche abgeben zu können, kann es vorgesehen sein, mindestens einen zur Speicherung bzw. Pufferung der Wäsche dienenden Sammelbehälter vorzusehen, der stets einen Vorrat an Wäsche beinhaltet, so dass selbst dann, wenn das Ansaugen der Wäsche am Saugkopf kurzfristig zur Beseitigung von Wäschepfropfen unterbrochen wird, an der Abgabeseite des pneumatischen Förderers Wäschestücke bedarfsgerecht an eine Behandlungseinrichtung abgegeben werden können. Denkbar ist es auch, die angesaugte Wäsche im Kreislauf zu führen, beispielsweise durch kontinuierliche pneumatische Förderung. Dann bildet der Umlaufförderer praktisch den Puffer oder Speicher.

Der vom Saugkopf angesaugte Wäschepfropfen wird vom Saugkopf zunächst angehoben, bevor durch kurzzeitige Unterbrechung der Saugluftversorgung des Saugkopfs der Wäschepfropfen vom Saugkopf losgelassen wird. Auf diese Weise wird der Wäschepfropfen vom Saugkopf fallengelassen, wodurch wirksam und zuverlässig eine Auflösung und/oder Zerteilung des Wäschepfropfens erfolgt. Es lassen sich so auch Wäschepfropfen aus stark zusammenhängenden und verschlungenen Wäschestücke durch Ablösen und Abfallen vom Saugkopf so zuverlässig zerteilen, dass beim nächsten Ansaugen der Wäschepfropfen so weit aufgeteilt ist, um den Saugkopf passieren zu können.

Das Anheben des durch einen Wäschepfropfen verschlossenen Saugkopfs erfolgt vorzugsweise durch separate und/oder externe Hub- bzw. Antriebsorgane, beispielsweise Druckmittelzylinder. Denkbar ist aber auch ein pneumatisches Anheben, vorzugsweise derart, dass der Unterdruck im Förderer, der sich bei einem Verschließen des Saugkopfs durch einen Wäschepfropfen einstellt, genutzt wird, den Saugkopf mit dem Wäschepfropfen anzuheben. Das anschließende Lösen des Wäschepfropfens vom Saugkopf geschieht in einfacher Weise durch eine Unterbrechnung des Saugvorgangs und vorzugsweise auch ein Belüften mindestens des Saugkopfs, vorzugsweise eines Teils der Rohrförderstrecke. Anschließend wird dann der Saugkopf wieder auf die Wäsche abgesenkt, so dass er die Wäsche des zerteilten Wäschepfropfens anschließend ansaugen kann zur automatischen Beladung des pneumatischen Förderers.

Gemäß einer Weiterbildung des zuvor beschriebenen Verfahrens ist vorgesehen, die Wäsche im Verlauf der Rohrförderstrecke aufzuteilen. Auf diese Weise kann die Wäsche postenweise an verschiedenen Stellen aus der Rohrförderstrecke ausgeschleust werden. Es können so mit einer einzigen Rohrförderanlage gleichzeitig mehrere nachfolgende Wäschereimaschinen oder Wäschebehandlungsmaschinen mit Wäsche versorgt werden. Dadurch kann die Förderkapazität der Rohrförderanlage besser ausgenutzt werden.

In Weiterbildung des Verfahrens ist vorgesehen, die Wäsche postenweise anzusaugen und die Wäscheposten im Verlauf der Rohrförderstrecke gezielt nach Bedarf zu unterschiedlichen Abschnitten der Rohrförderstrecke zu leiten, insbesondere unterschiedlichen Ausschleuseinrichtungen. Die durch die Rohrförderstrecke hindurchtransportierte Wäscheposten werden so aufgeteilt auf verschiedene Abgabestellen der Ausschleuseinrichtung. Es können so von der gleichen Rohrförderstrecke zwei oder auch noch mehrere Ausschleuseinrichtungen wahlweise mit einzelnen Wäscheposten, und zwar vorzugsweise gezielt gesteuert, versorgt werden. Das Verfahren ermöglicht so auch eine Sortierung der Wäscheposten, indem diese gezielt an unterschiedliche Abgabestellen hinter der jeweiligen Ausschleuseinrichtung transportierbar sind.

Eine Vorrichtung zur Lösung der eingangs genannten Aufgabe weist die Merkmale des Anspruchs 10 auf. Dadurch, dass der Saugkopf im Falle des Verschlusses durch einen Wäschepfropfen anhebbar und durch eine Unterbrechung der Saugluftversorgung der Wäschepfropfen vom Saugkopf lösbar ist, wird nicht nur eine Verstopfung des Saugkopfs automatisch beseitigt; vielmehr führt das Ablösen des Wäschepfropfens vom Saugkopf und das Fallenlassen des Wäschepfropfens zu einer automatischen Zerteilung bzw. Auflösung desselben. In der Regel kann dann bei einem darauffolgenden neuen Saugvorgang die Wäsche störungsfrei angesaugt und dadurch der pneumatische Förderer beladen werden. Eine eventuelle Störung des Beladevorgangs durch einen Wäschepfropfen wird so automatisch ohne manuelle Hilfe beseitigt und damit eine zuverlässige automatische Beladung des pneumatischen Förderers gewährleistet.

Es reicht aus, die Saugluftversorgung mindestens des Saugkopfs unterbrechbar auszubilden. Dadurch kann ein den Saugkopf verschließender Wäschepfropfen automatisch vom Saugkopf entfernt werden. Damit ein Wäschepfropfen rascher vom Saugkopf lösbar ist, ist gemäß einer Weiterbildung der Vorrichtung zusätzlich vorgesehen, mindestens den Saugkopf bei Bedarf zu belüften. Der den Wäschepfropfen am Saugkopf haltende Unterdruck wird dadurch schlagartig beseitigt, was ein zuverlässiges Auftrennen bzw. Zerteilen des Wäschepfropfens begünstigt, indem der Wäschepfropfen quasi pneumatisch "sprengbar" ist.

Es ist nach einer bevorzugten Weiterbildung der Vorrichtung vorgesehen, der Rohrförderstrecke einen Sammelbehälter zuzuordnen. Vorzugsweise befindet sich der Sammelbehälter am vom Saugkopf stromabwärtsgelegenen gegenüberliegenden Ende der Rohrleitungsstrecke, und zwar hinter einer Ausschleusvorrichtung der Wäsche, insbesondere der Wäscheposten, aus der Rohrförderstrecke. Der Sammelbehälter dient dabei als Wäschespeicher. Die Wäsche kann im Sammelbehälter zwischengelagert werden und ist von diesem bedarfsweise an beispielsweise eine nachfolgende Bearbeitungseinrichtung der Wäsche abgebbar. Insbesondere kann bei einer im Falle der Beseitigung von Wäschepfropfen diskontinuierlichen automatischen Beladung des pneumatischen Förderers ungleichmäßiger Wäschestrom ausgeglichen werden, so dass gegebenenfalls eine kontinuierliche Beschickung einer nachfolgenden Bearbeitungsmaschine mit Wäsche gewährleistet ist, auch wenn die Beladung hervorgerufen durch Wäschepfropfen mindestens zeitweise diskontinuierlich erfolgt.

Gemäß einer bevorzugten Ausgestaltung der Vorrichtung ist mindestens ein Sensor oder ein anderes Tastorgan zur Abtastung der Höhe des Wäschehaufens vorgesehen. Vorzugsweise ist dieser Sensor der Unterseite des Saugkopfs zugeordnet. Durch die Abtastung der Höhe des Wäschehaufens wird der Saugkopf schonend an den Wäschehaufen herangefahren, indem sich dieser praktisch an die Wäsche herantastet. Dadurch wird gewährleistet, dass die Wäsche nicht in den Saugkopf hineingedrückt wird und diesen so sehr verstopft, dass der Wäschepfropfen sich bei Unterbrechung des Saugvorgangs nicht mehr selbsttätig vom Saugkopf lösen kann; vielmehr der Saugkopf die Wäsche nur ansaugt, was die Gefahr der Verstopfung des Saugkopfs durch Wäschepfropfen verringert.

Eine bevorzugte Weiterbildung der zuvor beschriebenen Vorrichtung sieht vor, dass die Rohrförderstrecke mehrere Ausschleuseinrichtungen aufweist, und zwar mindestens zwei. Die Ausschleuseinrichtungen können gleich, aber auch unterschiedlich ausgebildet sein. Entscheidend ist, dass die Wäsche, insbesondere Wäscheposten, mit dieser Vorrichtung von der Rohrförderstrecke gezielt gesteuert an verschiedene Abgabestellen hinter den Ausschleusvorrichtungen gelangen, um von dort an mehreren gleichen oder auch unterschiedlichen Wäschebehandlungseinrichtungen weiterbehandelt zu werden.

Gemäß einer weiteren Ausgestaltung der Vorrichtung ist vorgesehen, der Rohrförderstrecke mindestens eine umschaltbare Weiche zuzuordnen zum gezielten, bedarfsweisen Zuführen der Wäsche bzw. Wäscheposten zur jeweiligen Ausschleuseinrichtung. Die Wäsche wird so nach Art eines "Verschiebebahnhofs" von der Vorrichtung verteilt auf verschiedene Abgabestellen hinter der jeweiligen Ausschleuseinrichtung.

Weitere Unteransprüche betreffen zweckmäßige Weiterbildungen der Verfahren und Vorrichtungen.

Bevorzugte Ausführungsbeispiele der Vorrichtungen und Verfahren werden nachfolgend anhand der Zeichnung näher erläutert. In dieser zeigen:
- Fig. 1: eine schematische Darstellung einer Vorrichtung in einer Ausgangsstellung,
- Fig. 2: eine Ansicht der Vorrichtung im Bereich eines Saugkopfs in der Ausgangsstellung der Fig. 1,
- Fig. 3: eine schematische Seitenansicht der Vorrichtung in einer Saugstellung,
- Fig. 4: eine Darstellung der Vorrichtung im Bereich des Saugkopfs in der Saugstellung der Fig. 3,
- Fig. 5: eine schematische Seitenansicht der Vorrichtung beim vom Saugkopf gelöstem Wäschepfropfen,
- Fig. 6: eine schematische Seitenansicht der Vorrichtung beim Ansaugen eines aufgelösten Wäschepfropfens, und
- Fig. 7: ein alternatives Ausführungsbeispiel der Vorrichtung in einer Darstellung analog zur Fig. 1.

Bei der hier gezeigten Vorrichtung handelt es sich um einen pneumatischen Förderer zum insbesondere postenweisen Transport von Wäsche innerhalb vorzugsweise einer Wäscherei. Es kann sich dabei um trockene und nasse Wäsche jeglicher Art handeln, beispielsweise Tischwäsche, Bettwäsche, Handtücher, Bekleidungsstücke und/oder Berufsbekleidung. Vom pneumatischen Förderer wird die Wäsche beispielsweise zu einer Waschmaschine, einem Trockner und/ oder einer Eingabemaschine einer Mangel transportiert.

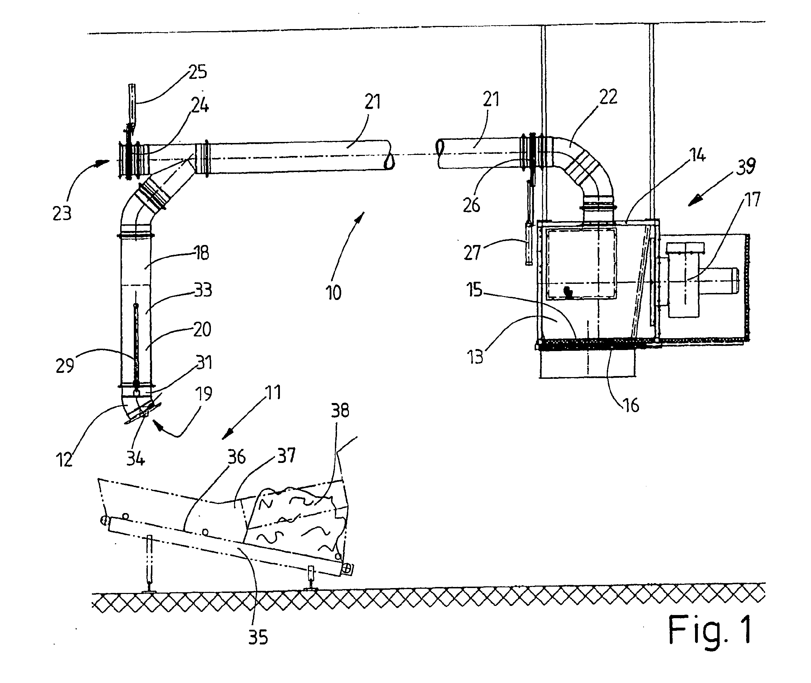

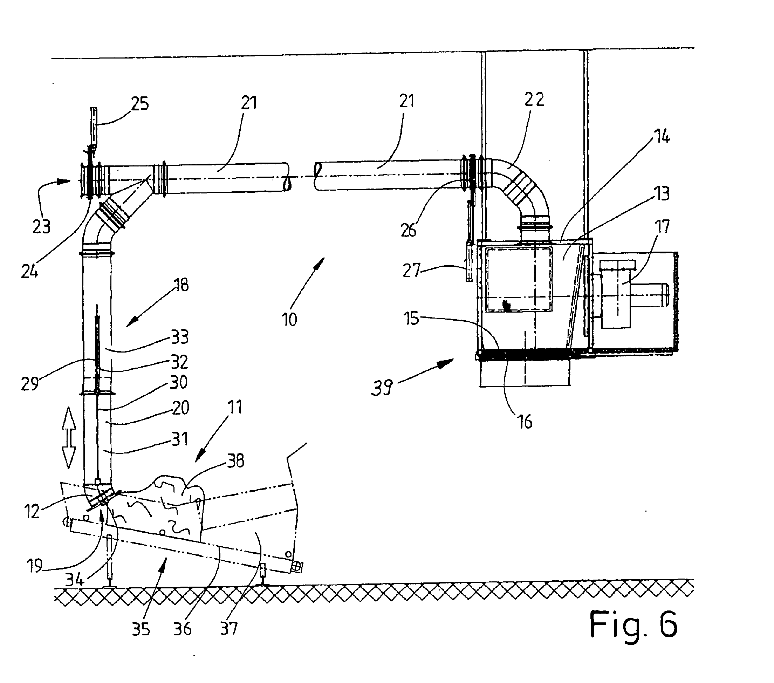

Der pneumatische Förderer verfügt über eine in den Figuren nur teilweise dargestellte Rohrförderstrecke 10 zur Bildung einer Förderstrecke mit entsprechendem Verlauf und der erforderlichen Länge. Am Anfang des pneumatischen Förderers befindet sich eine automatische Beladestation 11. Im Bereich der Beladestation 11 verfügt der pneumatische Förderer über einen Saugkopf 12, der in Förderrichtung den Anfang der Rohrförderstrecke 10 bildet. Am Ende der Rohrförderstrecke 10 befindet sich beim in den Fig. 1 bis 6 gezeigten pneumatischen Förderer eine (einzige) Ausschleuseinrichtung 39 nach Art einer Druckluftschleuse. Im gezeigten Ausführungsbeispiel ist der Ausschleuseinrichtung 39 ein Sammelbehälter 13 zugeordnet, wobei statt des Sammelbehälters 13 auch eine Aufnahmeeinrichtung vorgesehen sein kann. Der Sammelbehälter 13 kann Bestandteil der Ausschleuseinrichtung 39 sein, dieser aber auch nachgeordnet sein. Das Ende der Rohrförderstrecke 10 mündet in eine obere Deckwand 14 der Ausschleuseinrichtung 39 ein. Der Boden des Sammelbehälters 13 weist eine vorzugsweise vollflächige Öffnung 15 auf. Diese Öffnung 15 ist verschließbar, und zwar im hier gezeigten Ausführungsbeispiel durch einen Schieber 16. Neben der Ausschleuseinrichtung 39 befindet sich ein Luftströmungserzeuger, der beispielsweise als Ventilator 17 ausgebildet ist. Der Ventilator 17 wird derart betrieben, dass er Luft aus der Ausschleuseinrichtung 39 und aus der daran angeschlossenen Rohrförderstrecke 10 saugt. Dadurch wird auch im Saugkopf 12 ein Saugluftstrom zur Bildung eines Unterdrucks erzeugt. Eine zum Ventilator 17 weisende Seitenwand der Ausschleuseinrichtung 39 ist vorzugsweise vollflächig luftdurchlässig ausgebildet, beispielsweise als ein engmaschiges Sieb. Auf diese Weise wird die Wäsche vorzugsweise im Sammelbehälter 13 zurückgehalten, so dass sie nicht in den Ventilator 17 gelangen kann.

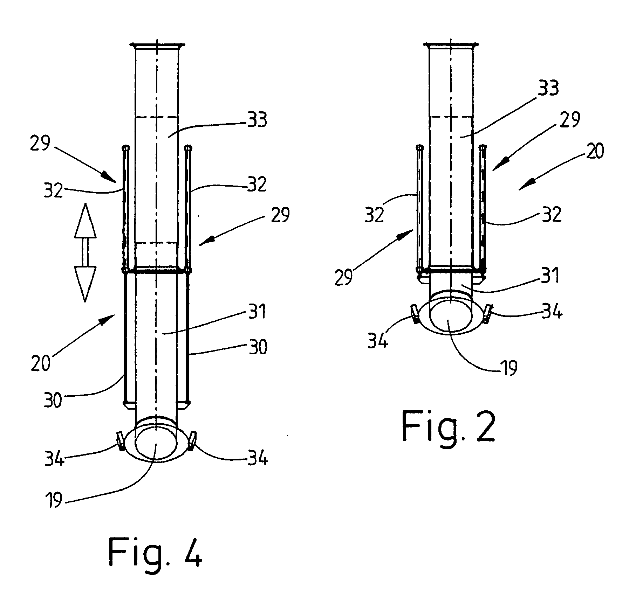

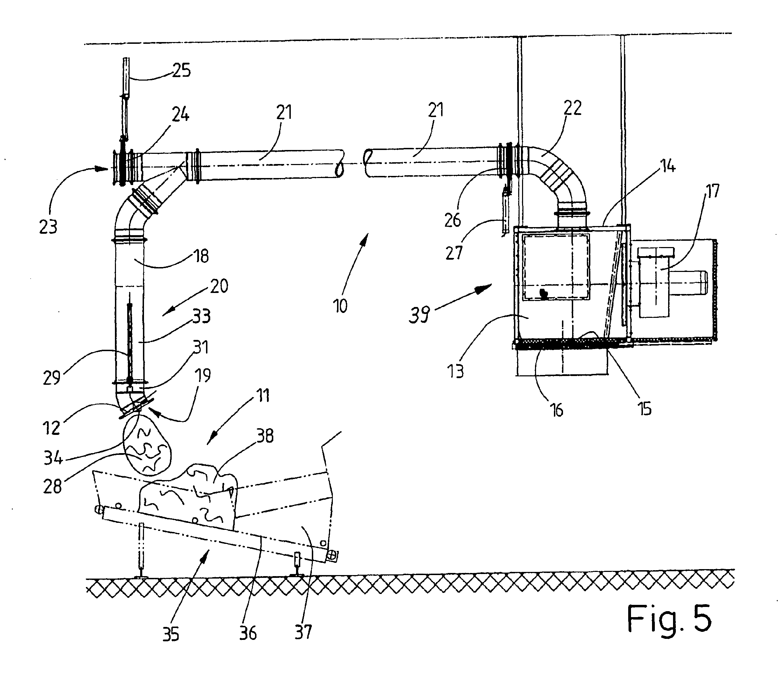

Der Saugkopf 12 ist am unteren Ende eines vertikalen Abschnitts 18 der Rohrförderstrecke 10 angeordnet, und zwar im gezeigten Ausführungsbeispiel mit schräggerichteter Saugöffnung 19. In den Fig. 2 und 4 ist eine kreisrunde Saugöffnung 19 gezeigt. Der Saugkopf 12 kann aber auch eine Saugöffnung mit beliebigen anderen, beispielsweise ovalen, Querschnitten aufweisen. Ebenso kann der Saugkopf 12 mehrere Saugöffnungen beliebiger Querschnitte aufweisen. Der vertikale Abschnitt 18 der Rohrförderstrecke 10 ist mindestens im unteren Bereich als ein pneumatisch betätigtes Teleskoprohr 20 ausgebildet. Dadurch kann der Saugkopf 12 pneumatisch auf- und abbewegt werden. Der vertikale Abschnitt 18 der Rohrförderstrecke 10 mündet an seinem vom Saugkopf 12 weggerichteten (oberen) Ende in einen Hauptabschnitt 21 der Rohrförderstrecke 10.

Dieser nur teilweise in den Figuren dargestellte Hauptabschnitt 21 kann einen beliebigen Verlauf haben, und zwar ist er angepasst an die örtlichen Gegebenheiten und den zu überwindenden Förderweg der Wäsche. Die hier gezeigten gegenüberliegenden Endbereiche des Hauptabschnitts 21 verfügten über einen etwa horizontalen Verlauf. An den zur Ausschleuseinrichtung 39 weisenden hinteren Endbereich des Hauptabschnitts 21 schließt ein Verbindungsabschnitt 22 an, der den Hauptabschnitt 21 der Rohrförderstrecke 10 mit der Ausschleuseinrichtung 39 verbindet.

Dort, wo der den Saugkopf 12 aufweisende, vertikale Abschnitt 18 der Rohrförderstrecke 10 mit dem Hauptabschnitt 21 verbunden ist, weist der Hauptabschnitt 21 einen Endstutzen mit einer Entlüfungsöffnung 23 auf. Die Entlüftungsöffnung 23 ist durch einen Schieber 24 verschließbar. Der Schieber 24 ist im gezeigten Ausführungsbeispiel durch einen Pneumatikzylinder 25 betätigbar, nämlich bei Bedarf zu öffnen und auch wieder zu schließen.

Am zur Ausschleuseinrichtung 39 mit dem Sammelbehälter 13 weisenden Ende verfügt der Hauptabschnitt 21 der Rohrförderstrecke 10 über einen Absperrschieber 26, der ebenfalls durch einen Pneumatikzylinder 27 geöffnet bzw. geschlossen werden kann.

Dem Saugkopf 12 ist wenigstens ein nicht gezeigter Detektor zugeordnet, der ein Signal erzeugt, wenn die Saugöffnung 19 des Saugkopfs 12 durch die Wäsche verschlossen ist, nämlich eine solche Menge miteinander verschlungener Wäschestücke angesaugt hat, die nicht durch die Saugöffnung 19 des Saugkopfs 12 hindurchpasst. In diesem Falle wird von einem den Saugkopf 12 verschließenden Wäschepfropfen 28 (Fig. 5) gesprochen. Beispielsweise kann der Detektor den dann mindestens im Teleskoprohr 20 ansteigenden Unterdruck detektieren. Mit diesem Unterdruck können auch zwei an gegenüberliegenden Seiten des Teleskoprohrs 20 angeordnete Pneumatikzylinder 29 betrieben werden. Ein- und ausfahrbare Kolbenstangen 30 der Pneumatikzylinder 29 sind fest mit einem auf- und abbewegbaren Rohr 31 des Teleskoprohrs 20 verbunden. Die Kolben 32 der Pneumatikzylinder 29 sind fest mit einem unterem Ende eines feststehenden Rohrs 33 des Teleskoprohrs 20 verbunden (Fig. 2 und 4).

An gegenüberliegenden Seiten der Öffnung 15 des Saugkopfs 12 ist jeweils ein Reflexionstaster 34 angeordnet (Fig. 2 und 4). Diese Anordnung ist so getroffen, dass die Blickrichtung jedes Reflexionstasters 34 nach unten zur Wäsche hin weist.

Die vom pneumatischen Förderer vorzugsweise als Wäscheposten weiterzutransportierende Wäsche wird in den Bereich des Saugkopfs 12 angefördert, und zwar durch beliebige Stetigförderer, beispielsweise Gurtförderer, Rutschen oder dergleichen. Die Wäsche kann aber auch diskontinuierlich, beispielsweise in Wäschewagen oder Drehtischen, im Bereich des Saugkopfs 12 bereitgestellt werden. In den Figuren ist dem Saugkopf 12 ein durch strich-punktierte Linien angedeuteter Beladeförderer 35 zugeordnet. Der Beladeförderer 35 ist einem Ende einer beliebigen anderen Förderstrecke zugeordnet. Einem Obertrum 36 des Beladeförderers 35 ist im gezeigten Ausführungsbeispiel ein durch parallele Seitenwände und eine Endwand gebildeter Trichter 37 zugeordnet. Im Bereich dieses Trichters 37 sammelt sich die an die Beladestation 11 herangeförderte Wäsche nahe unter dem Saugkopf 12. Es handelt sich dabei um einen andeutungsweise dargestellten Wäschehaufen 38 aus unvereinzelten Wäschestücken gleicher oder auch unterschiedlicher Art und/oder Größe. Im Bereich des der Beladestation 11 zugeordneten Beladeförderers 35 erfolgt eine automatische Beladung des pneumatischen Förderers, indem die Wäsche vom Saugkopf 12 angesaugt und entlang der Rohrförderstrecke 10 pneumatisch zum Sammelbehälter 13 oder dergleichen transportiert wird. Durch Öffnen des Schiebers 16 unter der bodenseitigen Öffnung 15 des Sammelbehälters 13 sind von diesem die Wäschestücke bedarfsweise, und zwar sowohl kontinuierlich als auch diskontinuierlich an eine Behandlungseinrichtung abgebbar. Bei der Behandlungsvorrichtung kann es sich um eine Waschmaschine, einen Trockner, einen Zuführförderer zu einer Mangel oder eine sonstige Wäschebe- und -verarbeitungsmaschine, wie sie insbesondere in Wäschereien üblich ist, handeln.

Nachfolgend wird das Verfahren zum automatischen Beladen des insbesondere vorstehend beschriebenen pneumatischen Förderers näher beschrieben:

In der in der Fig. 1 gezeigten Ausgangsstellung ist der Saugkopf 12 am unteren Ende des beweglichen Rohrs 31 vom Teleskoprohr 20 hochgefahren. Die Entlüftungsöffnung 23 ist geschlossen und der Absperrschieber 26 geöffnet. Der Ventilator 17 befindet sich in Betrieb und erzeugt in der Rohrförderstrecke 10 eine Luftströmung in Richtung zur Ausschleuseinrichtung 39. Durch den Saugkopf 12 hindurch tritt angesaugte Luft in die Rohrförderstrecke 10 ein. Auf dem Beladeförderer 35 befindet sich ein Wäschehaufen 38.

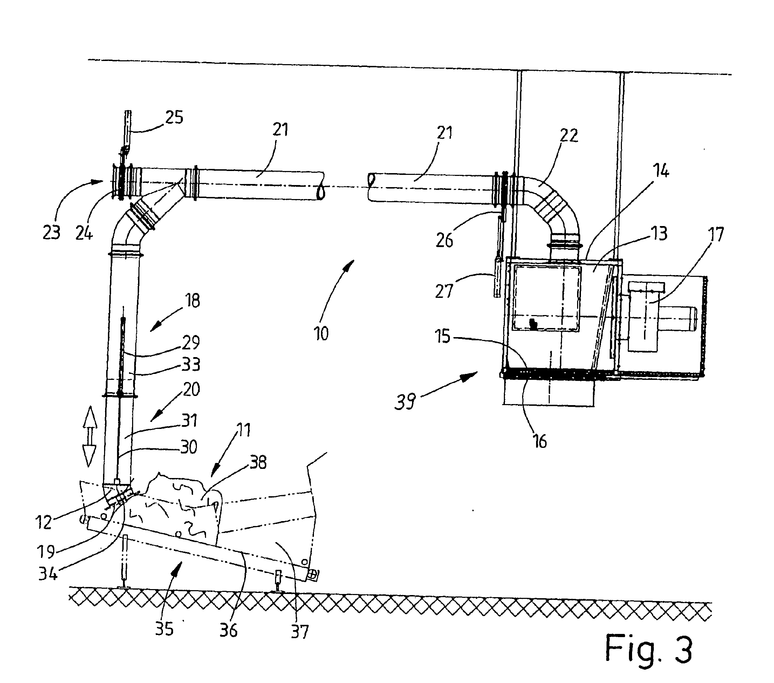

Zum automatischen Beladen des pneumatischen Förderers wird nun der Saugkopf 12 vom Teleskoprohr 20 abgesenkt in Richtung des Obertrums 36 des Beladeförderers 35 (Fig. 3). Dabei gelangt die schräg in Richtung zum Wäschehaufen 38 weisende Öffnung 15 des Saugkopfs 12 in die Nähe des Wäschehaufens 38, der gegebenenfalls zusätzlich vom Beladeförderer 35 in Richtung zur Saugöffnung 19 des Saugkopfs 12 transportiert wird. Sobald die Reflexionstaster 34 im Bereich des Saugkopfs 12 ein Anliegen desselben am Wäschehaufen 38 oder einen vorherbestimmten Abstand der Saugöffnung 19 zum Wäschehaufen 38 detektieren, wird das weitere Absenken des Saugkopfs 12 gestoppt, und zwar ebenso wie ein gegebenenfalls in Richtung des Saugkopfs 12 erfolgender Transport des Wäschehaufens 38 durch den Beladeförderer 35. Es wird nunmehr Wäsche, und zwar ein (kleiner) Wäscheposten, vom Wäschehaufen 38 durch die Saugöffnung 19 des Saugkopfs 12 hindurch angesaugt und entlang der Rohrförderstrecke 10 in den Sammelbehälter 13 transportiert. Dabei wird durch die Reflexionstaster 34 kontinuierlich der Saugkopf 12 nachgeführt, damit dieser eine Anlage oder einen bestimmten Abstand zum Wäschehaufen 38 beibehält. Das kann durch entsprechendes weiteres Absenken des Saugkopfs 12 durch das Teleskoprohr 20 erfolgen und/oder einen weiteren Antrieb des Beladeförderers 35 in Richtung der Öffnung 15 des Saugkopfs 12.

Die Fig. 5 verdeutlicht den Fall, dass der Saugkopf 12 aus dem Wäschehaufen 38 einen zu großen Wäscheposten, nämlich einen Wäschepfropfen 28, ansaugt. Der Wäschepfropfen 28 ist durch den Saugkopf 12 nicht hindurchsaugbar. Der Wäschepfropfen 28 verschließt dadurch die Saugöffnung 19 des Saugkopfs 12. Dieses wird durch ein entsprechendes Detektionsmittel angezeigt, indem beispielsweise der durch den Verschluss der Saugöffnung 19 vom Wäschepfropfen 28 ansteigende Unterdruck im Bereich mindestens des Saugkopfs 12 detektiert wird. Es wird dabei vom Teleskoprohr 20 der Saugkopf 12 mit dem Wäschepfropfen 28 angehoben durch ein Verfahren der Pneumatikzylinder 29. Dies kann durch den sich erhöhenden Unterdruck in der Rohrförderstrecke 10 geschehen. Nachdem der Saugkopf 12 mit dem Wäschepfropfen 28 hochgefahren worden ist, wird der Absperrschieber 26 geschlossen und die Entlüftungsöffnung 23 geöffnet. Dabei kann der Ventilator 17 weiterhin in Betrieb bleiben. Durch das Schließen des Absperrschiebers 26 und das Öffnen des Entlüftungsschiebers 23 wird der Ansaugvorgang des Wäschepfropfens 28 durch den Saugkopf 12 unterbrochen. Der sich bis zum Absperrschieber 26 erstreckende Abschnitt der Rohrförderstrecke 10, und insbesondere der Saugkopf 12, werden entlüftet, wodurch der Wäschepfropfen 28 vom Saugkopf 12 losgelassen wird und herunterfällt auf den Beladeförderer 35. Dabei kommt es zu einer Zerteilung bzw. einer Entzerrung des Wäschepfropfens 28, wodurch kleine Wäscheposten entstehen. Hervorgerufen wird die Zerteilung des Wäschepfropfens 28 zum einen durch den schlagartigen Abbau des Unterdrucks am Saugkopf 12 beim Entlüften desselben und zum anderen durch das Herunterfallen des Wäschepfropfens 28 auf den Beladeförderer 35.

Es wird nun wieder der Absperrschieber 26 geöffnet und der Entlüftungsschieber 23 geschlossen. Danach oder gleichzeitig wird der Saugkopf 12 vom Teleskoprohr 20 wieder an den Wäschehaufen 38 herangefahren, also abgesenkt. Es werden nun Teile des entzerrten Wäschepfropfens 28, nämlich kleinere Wäscheposten mit einer geringeren Anzahl von Wäschestücken, vom Saugkopf 12 angesaugt, wobei die nunmehr angesaugte kleinere Anzahl von Wäschestücken durch die Saugöffnung 19 des Saugkopfs 12 hindurchgelangen kann und als Wäscheposten entlang der Förderstrecke 10 in den mindestens einen Sammelbehälter 13 transportierbar ist.

Sollte in Ausnahmefällen der Wäschepfropfen 28 nicht durch einmaliges Entlüften und Fallenlassen ausreichend zerteilbar sein, wird der vorstehend beschriebene Vorgang des Ansaugens, Anhebens, Entlüftens und Fallenlassens des Wäschepfropfens 28 so oft wiederholt, bis der Wäschepfropfen 28 so weit zerteilt ist, dass die Wäsche durch den Saugkopf 12 hindurchsaugbar ist.

Da der Sammelbehälter 13 als Speicher für angesaugte Wäschestücke dient, kann unabhängig von der Ansaugung weiterer Wäschestücke, insbesondere zur Beseitigung von Wäschepfropfen 28, bei der automatischen Beladung des pneumatischen Förderers Wäsche vom Sammelbehälter 13 kontinuierlich oder auch diskontinuierlich an eine nachfolgende Wäschebehandlungseinrichtung abgegeben werden.

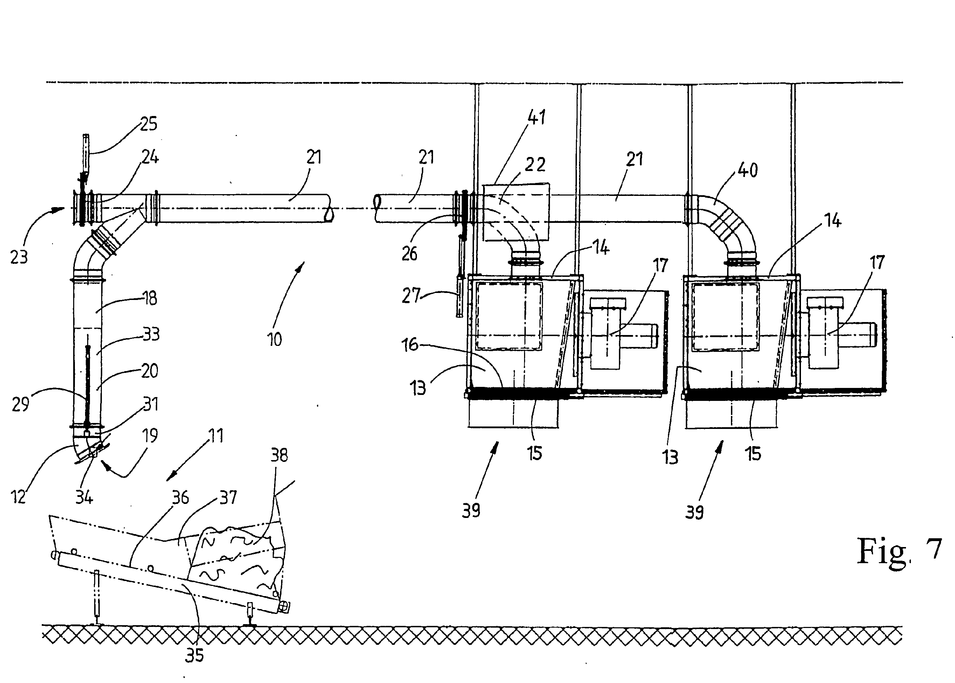

Die Fig. 7 zeigt eine alternative Vorrichtung, die sich von der zuvor beschriebenen und in den Fig. 1 bis 6 gezeigten Vorrichtung im Wesentlichen nur dadurch unterscheidet, dass im Endbereich der Rohrförderstrecke 10 zwei Aufschleuseinrichtungen 39 vorgesehen sind. Im gezeigten Ausführungsbeispiel sind zwei gleiche Ausschleuseinrichtungen 39 nebeneinander angeordnet. Es können aber auch unterschiedliche Ausschleuseinrichtungen 39 vorgesehen sein, und zwar in beliebigen Relativanordnungen zueinander. Insbesondere können die Abstände der Ausschleuseinrichtungen 39 wesentlich größer sein als in der Fig. 7 gezeigt. Die Rohrförderstrecke 10 führt zu beiden Ausschleuseinrichtungen 39. Demzufolge ist auch die in der Fig. 7 rechts gezeigte Ausschleuseinrichtung 39 mit einem bogenförmigen Verbindungsabschnitt 40 versehen. Der Verbindungsabschnitt 40 mündet, wie der Verbindungsabschnitt 22, der zur ersten Ausschleuseinrichtung 39 führt, in den horizontalen Hauptabschnitt 21 der Rohrförderstrecke 10. An der Abzweigstelle des Verbindungsabschnitts 22 vom Hauptabschnitt 21 befindet sich eine in der Fig. 7 nur schematisch dargestellte umschaltbare Weiche 41. Diese Weiche 41 ist so ausgebildet, dass durch den Hauptabschnitt 21 hindurchtransportierte Wäscheposten entweder über den Verbindungsabschnitt 22 zur ersten Ausschleuseinrichtung 39 (linke Ausschleuseinrichtung 39 in der Fig. 7) oder über den Verbindungsabschnitt 40 zur zweiten Ausschleuseinrichtung 39 (in der Fig. 7 rechts gezeigte Ausschleuseinrichtung 39) gelangen. Die als Luftschleusen wirkenden Ausschleuseinrichtungen 39 lassen eine drucklose Abgabe des jeweiligen Wäschepostens an die Sammelbehälter 13 in oder hinter der ersten Ausschleuseinrichtung 39 oder der zweiten Ausschleuseinrichtung 39 zu. Dabei braucht nicht jeder Ausschleuseinrichtung 39 ein Sammelbehälter 13 zugeordnet zu sein. Es ist auch möglich, von einer oder beiden Ausschleuseinrichtungen 39 die Wäscheposten auf eine andere, beliebige Einrichtung zum Weitertransport der Wäscheposten aufzugeben.

Die Weiche 41 kann nach Bedarf umgeschaltet werden, so dass gezielt die Wäscheposten der einen oder anderen Ausschleuseinrichtung 39 zugeleitet werden können. Dadurch erfolgt eine Aufteilung der Wäsche bzw. Wäscheposten. Diese Aufteilung kann entweder wahlweise oder gezielt sortiert erfolgen.

Es ist auch denkbar, an irgendeiner Stelle der Rohrförderstrecke 10 eine Detektions- und/oder Wiegeeinrichtung vorzusehen, womit der jeweilige Wäscheposten gewogen oder alternativ bzw. zusätzlich hinsichtlich mindestens einer ausgewählten Eigenschaft geprüft werden kann. Durch entsprechende Ansteuerung der umschaltbaren Weiche 41 kann dann gezielt die Wäsche oder jeder Wäscheposten einer der beiden Ausschleuseinrichtungen 39 zugeführt werden. Durch das Wiegen der Wäscheposten ist es möglich, die Umschaltung der Weiche 41 in Abhängigkeit vom Gewicht der Wäsche vorzunehmen, die der jeweiligen Ausschleuseinrichtung 39 und beispielsweise dem dieser zugeordneten Sammelbehälter 13 zugeführt worden ist. Auch kann beispielsweise eine Sortierung nach dem Feuchtigkeitsgrad der Wäsche, aber auch anderer Kriterien, erfolgen.

Die erfindungsgemäße Aufteilung der durch die gleiche Rohrförderstrecke 10 hindurchgeführten Wäsche, insbesondere Wäscheposten, führt dazu, dass diese gezielt verteilt oder sortiert an verschiedenen Stellen, nämlich unterschiedlichen Ausschleuseinrichtungen 39, die Rohrförderstrecke 10 verlassen und dadurch zum Beispiel mit der gleichen Rohrförderstrecke 10 mehrere Einrichtungen zur weiteren Bearbeitung und Behandlung der Wäsche beschickt werden können. Dadurch kann die Vorrichtung mit einer besseren Kapazitätsauslastung betrieben werden, insbesondere mehreren gleichen oder auch unterschiedlichen Wäschereibehandlungsmaschinen zugeführt werden, die üblicherweise weniger Wäsche verarbeiten können als durch die Rohrförderstrecke 10 der Vorrichtung hindurchtransportierbar sind.

### Bezugszeichenliste

- 10: Rohrförderstrecke
- 11: Beladestation
- 12: Saugkopf
- 13: Sammelbehälter
- 14: Deckwand
- 15: Öffnung
- 16: Schieber
- 17: Ventilator
- 18: vertikaler Abschnitt
- 19: schräggerichtete Saugöffnung
- 20: Teleskoprohr
- 21: Hauptabschnitt
- 22: Verbindungsabschnitt
- 23: Entlüftungsöffnung
- 24: Schieber
- 25: Pneumatikzylinder
- 26: Absperrschieber
- 27: Pneumatikzylinder
- 28: Wäschepfropfen
- 29: Pneumatikzylinder
- 30: Kolbenstange
- 31: bewegliches Rohr
- 32: Kolben
- 33: feststehendes Rohr
- 34: Reflexionstaster
- 35: Beladeförderer
- 36: Obertrum
- 37: Trichter
- 38: Wäschehaufen
- 39: Ausschleuseinrichtung
- 40: Verbindungsabschnitt
- 41: umschaltbare Weiche

## Patentansprüche

1. Verfahren zur pneumatischen Förderung von Wäsche oder dergleichen, insbesondere zum Beladen eines pneumatischen Förderers mit Wäsche oder dergleichen, wobei die Wäsche oder dergleichen aus einem Vorrat, insbesondere Wäschehaufen (38), von einem Saugkopf (12) angesaugt und pneumatisch entlang einer Rohrfönderstrecke (10) weitergefördert wird, **dadurch gekennzeichnet, dass** beim Ansaugen einer zum Weitertransport durch den Förderer zu großen Menge von Wäsche der Saugkopf (12) automatisch etwas angehoben und der Saugvorgang anschließend automatisch kurz unterbrochen wird.

2. Verfahren nach Anspruch 1, **dadurch gekennzeichnet, dass** der Saugvorgang nur im Falle der Ansaugung einer zu großen Menge von Wäsche, wie einem Wäschepfropfen (28), kurzzeitig unterbrochen wird.

3. Verfahren nach Anspruch 1, **dadurch gekennzeichnet, dass** eine zu große Menge von Wäsche, wie ein Wäschepfropfen (28), pneumatisch zerteilt bzw. aufgelöst wird.

4. Verfahren nach Anspruch 1, **dadurch gekennzeichnet, dass** zum Fallenlassen eines Wäschepfropfens (28) der Saugvorgang unterbrochen wird.

5. Verfahren nach Anspruch 1, **dadurch gekennzeichnet, dass** der Saugkopf (12) gesteuert an den Wäschehaufen (38) herangefahren wird.

6. Verfahren nach Anspruch 1, **dadurch gekennzeichnet, dass** ein Verschließen des Saugkopfs (12) durch einen Wäschepfropfen (28) detektiert wird.

7. Verfahren nach einem der vorhergehenden Ansprüche, **dadurch gekennzeichnet, dass** die Wäsche im Verlauf der Rohrförderstrecke (10) aufgeteilt wird.

8. Verfahren nach einem der vorhergehenden Ansprüche, **dadurch gekennzeichnet, dass** die Wäsche postenweise angesaugt wird und die Wäscheposten im Verlauf der Rohrförderstrecke (10) zu unterschiedlichen Abschnitten der Rohrförderstrecke (10) geleitet werden, insbesondere zu unterschiedlichen Ausschleuseinrichtungen (39).

9. Vorrichtung zur pneumatischen Förderung von Wäsche oder dergleichen, mit mindestens einem anhebbaren Saugkopf (12), wenigstens einer daran anschließenden Rohrförderstrecke (10) und wenigstens einem Luftströmungserzeuger, **dadurch gekennzeichnet, dass** bei einem Verschluss durch die Wäsche der Saugkopf (12) automatisch anhebbar und die Saugluftversorgung mindestens des Saugkopfs (12) anschließend automatisch kurz unterbrechbar ist zum Trennen der Wäsche vom Saugkopf (12).

10. Vorrichtung nach Anspruch 9, **dadurch gekennzeichnet, dass** mindestens der Saugkopf (12) belüftbar ist.

11. Vorrichtung nach Anspruch 9, **dadurch gekennzeichnet, dass** der Rohrförderstrecke (10) ein Sammelbehälter (13) zugeordnet ist.

12. Vorrichtung nach Anspruch 11, **dadurch gekennzeichnet, dass** der Sammelbehälter (13) mit Saugluft beaufschlagbar ist.

13. Vorrichtung nach Anspruch 11 oder 12, **dadurch gekennzeichnet, dass** der Luftströmungserzeuger an den Sammelbehälter (13) angeschlossen ist.

14. Vorrichtung nach Anspruch 9, **dadurch gekennzeichnet, dass** der Rohrförderstrecke (10) mindestens eine verschließbare Entlüftungsöffnung (23) zugeordnet ist.

15. Vorrichtung nach Anspruch 9, **dadurch gekennzeichnet, dass** der Rohrförderstrecke (10) ein Absperrmittel (26) zugeordnet ist.

16. Vorrichtung nach Anspruch 15, **dadurch gekennzeichnet, dass** das Absperrmittel (26) in Strömungsrichtung der Saugluft vor dem Luftströmungserzeuger angeordnet ist.

17. Vorrichtung nach Anspruch 9, **dadurch gekennzeichnet, dass** mindestens ein Detektionsmittel vorgesehen ist, das einen Verschluss des Saugkopfs (12) durch einen Wäschepfropfen (28) detektiert.

18. Vorrichtung nach Anspruch 9, **dadurch gekennzeichnet, dass** wenigstens ein Mittel zur Abtastung der Höhe eines Wäschehaufens (38) vorgesehen ist, der das Heranfahren des Saugkopfs (12) an den Wäschehaufen (38) steuert.

19. Vorrichtung nach einem der Ansprüche 9 bis 18, **dadurch gekennzeichnet, dass** der Rohrförderstrecke (10) mehrere Ausschleuseinrichtungen (39) zugeordnet sind.

20. Vorrichtung nach Anspruch 19, **dadurch gekennzeichnet, dass** die Rohrförderstrecke (10) mindestens eine umschaltbare Weiche (41) aufweist, zum gezielten und bedarfsweisen Zuführen von Wäsche, insbesondere einzelner Wäscheposten, zu der jeweiligen Ausschleuseinrichtung (39) bzw. einer Auffangeinrichtung.

21. Vorrichtung nach Anspruch 19 oder 20, **dadurch gekennzeichnet, dass** jeder Ausschleuseinrichtung (39) mindestens eine eigene Auffangeinrichtung, beispielsweise ein Sammelbehälter (13) zugeordnet ist.

## Claims

1. A process for pneumatically conveying laundry or the like, in particular for loading a pneumatic conveyor with laundry or the like, the laundry or the like being picked up by a suction head (12) from a supply, in particular a pile of laundry (38), and further transported pneumatically along a tubular conveying section (10), **characterized in that**, when an excessively large quantity of laundry for further transport by the conveyor is picked up, the suction head (12) is automatically slightly raised and subsequently the suction process is automatically interrupted for a brief interval.

2. The process according to Claim 1, **characterized in that** the suction operation is interrupted briefly only in the case of an excessively large quantity of laundry, for example a plug of laundry (28), being picked up.

3. The process according to Claim 1, **characterized in that** an excessively large quantity of laundry, for example a plug of laundry (28), is separated or broken up pneumatically.

4. The process according to Claim 1, **characterized in that** the suction operation is interrupted in order to allow a plug of laundry (28) to fall.

5. The process according to Claim 1, **characterized in that** the suction head (12) is moved in a controlled manner up to the pile of laundry (38).

6. The process according to Claim 1, **characterized in that** a closure of the suction head (12) by a plug of laundry (28) is detected.

7. The process according to one of the preceding Claims, **characterized in that** the laundry is divided up in the course of the tubular conveying section (10).

8. The process according to one of the preceding Claims, **characterized in that** the laundry is picked up in batches and that the batches of laundry in the course of the tubular conveying section (10) are directed to different portions of the tubular conveying section (10), in particular to different ejecting arrangements (39).

9. An apparatus for pneumatically conveying laundry or the like, having at least one suction head (12) that can be raised, at least one adjoining tubular conveying section (10) and at least one air-flow generator, **characterized in that**, in the case of being closed by the laundry, the suction head (12) can be automatically raised and subsequently it being possible to interrupt automatically the supply of suction air briefly at least to the suction head (12) for the purpose of separating the laundry from the suction head (12).

10. The apparatus according to Claim 9, **characterized in that** at least the suction head (12) can have air admitted to it.

11. The apparatus according to Claim 9, **characterized in that** the tubular conveying section (10) is assigned a collecting container (13).

12. The apparatus according to Claim 11, **characterized in that** the collecting container (13) can be subjected to the action of suction air.

13. The apparatus according to Claim 11 or 12, **characterized in that** the air-flow generator is connected to the collecting container (13).

14. The apparatus according to Claim 9, **characterized in that** the tubular conveying section (10) is assigned at least one closable venting opening (23).

15. The apparatus according to Claim 9, **characterized in that** the tubular conveying section (10) is assigned a shut-off means (26).

16. The apparatus according to Claim 15, **characterized in that** the shut-off means (26) is arranged upstream of the air-flow generator, as seen in the flow direction of the suction air.

17. The apparatus according to Claim 9, **characterized in that** at least one detection means is provided, this means detecting closure of the suction head (12) by a plug of laundry (28).

18. The apparatus according to Claim 9, **characterized in that** at least one means is provided for sensing the height of a pile of laundry (38), this means controlling the movement of the suction head (12) up to the pile of laundry (38).

19. The apparatus according to one of the Claims 9 to 18, **characterized in that** the tubular conveying section (10) is assigned a plurality of ejecting arrangements (39).

20. The apparatus according to Claim 19, **characterized in that** the tubular conveying section (10) has at least one switch-over diverter (41) for feeding laundry, in particular individual batches of laundry, in a specific manner, and as required, to the respective ejecting arrangement (39) or to an intercepting arrangement.

21. The apparatus according to Claim 19 or 20, **characterized in that** each ejecting arrangement (39) is assigned at least one dedicated intercepting arrangement, for example a collecting container (13).

## Revendications

1. Procédé pour le transport pneumatique de linge ou similaire, notamment pour charger un convoyeur pneumatique avec du linge ou similaire, le linge ou similaire étant aspiré d'un stock, notamment d'une pile de linge (38), par une tête aspirante (12) et étant acheminé pneumatiquement le long d'une voie de transport tubulaire (10), **caractérisé en ce que** lors de l'aspiration d'une quantité de linge trop importante pour l'acheminement par le convoyeur, la tête aspirante (12) est automatiquement un peu soulevée et l'opération d'aspiration est ensuite brièvement et automatiquement interrompue.

2. Procédé selon la revendication 1, **caractérisé en ce que** l'opération d'aspiration n'est interrompue brièvement que dans le cas de l'aspiration d'une quantité de linge trop importante, comme un bouchon de linge (28).

3. Procédé selon la revendication 1, **caractérisé en ce qu'**une quantité de linge trop importante, comme un bouchon de linge (28), est divisée ou désagrégée pneumatiquement.

4. Procédé selon la revendication 1, **caractérisé en ce que** pour laisser tomber un bouchon de linge (28), on interrompt l'opération d'aspiration.

5. Procédé selon la revendication 1, **caractérisé en ce que** la tête aspirante (12) est approchée de manière commandée de la pile de linge (38).

6. Procédé selon la revendication 1, **caractérisé en ce que** l'on détecte une fermeture de la tête aspirante (12) par un bouchon de linge (28).

7. Procédé selon l'une quelconque des revendications précédentes, **caractérisé en ce que** le linge est divisé au cours de son déplacement sur la voie de transport tubulaire (10).

8. Procédé selon l'une quelconque des revendications précédentes, **caractérisé en ce que** le linge est aspiré par lot et les lots de linge sont conduit au cours de leur déplacement sur la voie de transport tubulaire (10) vers différentes portions de la voie de transport tubulaire (10), notamment vers différents dispositifs d'éclusage (39).

9. Dispositif pour le transport pneumatique de linge ou similaire, comprenant au moins une tête aspirante soulevable (12), au moins une voie de transport tubulaire (10) s'y raccordant et au moins un générateur de flux d'air, **caractérisé en ce que** dans le cas d'une fermeture par le linge, la tête aspirante (12) peut être automatiquement soulevée et l'alimentation en air d'aspiration d'au moins la tête aspirante (12) peut ensuite être automatiquement et brièvement interrompue pour séparer le linge de la tête aspirante (12).

10. Dispositif selon la revendication 9, **caractérisé en ce qu'**au moins la tête aspirante (12) peut être ventilée.

11. Dispositif selon la revendication 9, **caractérisé en ce que** l'on associe à la voie de transport tubulaire (10) un récipient collecteur (13).

12. Dispositif selon la revendication 11, **caractérisé en ce que** le récipient collecteur (13) peut être sollicité par de l'air d'aspiration.

13. Dispositif selon la revendication 11 ou 12, **caractérisé en ce que** le générateur de flux d'air est raccordé au récipient collecteur (13).

14. Dispositif selon la revendication 9, **caractérisé en ce que** l'on associe à la voie de transport tubulaire (10) au moins une ouverture de désaérage refermable (23).

15. Dispositif selon la revendication 9, **caractérisé en ce que** l'on associe à la voie de transport tubulaire (10) un moyen de blocage (26).

16. Dispositif selon la revendication 15, **caractérisé en ce que** le moyen de blocage (26) est disposé dans la direction du flux d'air d'aspiration avant le générateur de flux d'air.

17. Dispositif selon la revendication 9, **caractérisé en ce que** l'on prévoit au moins un moyen de détection qui détecte une fermeture de la tête aspirante (12) par un bouchon de linge (28).

18. Dispositif selon la revendication 9, **caractérisé en ce que** l'on prévoit au moins un moyen pour détecter la hauteur d'une pile de linge (38) qui commande le rapprochement de la tête aspirante (12) de la pile de linge (38).

19. Dispositif selon l'une quelconque des revendications 9 à 18, **caractérisé en ce que** l'on associe à la voie de transport tubulaire (10) plusieurs dispositifs d'éclusage (39).

20. Dispositif selon la revendication 19, **caractérisé en ce que** la voie de transport tubulaire (10) présente au moins un aiguillage commutable (41), pour l'apport de linge spécifique et en fonction des besoins, notamment de lots de linge individuels, au dispositif d'éclusage particulier (39) ou à un dispositif de collecte.

21. Dispositif selon la revendication 19 ou 20, **caractérisé en ce que** l'on associe à chaque dispositif d'éclusage (39) au moins un dispositif de collecte propre, par exemple un récipient collecteur (13).
